# EUROPÄISCHE PATENTSCHRIFT

(11) **EP 1 718 444 B1**
(45) Veröffentlichungstag und Bekanntmachung des Hinweises auf die Patenterteilung: **27.01.2010**
(21) Anmeldenummer: 05715404.9
(22) Anmeldetag: 18.02.2005
(51) Int. Cl.: B28B 13/04, B65G 59/06

(54) **VORRICHTUNG ZUM TRENNEN VON DAMPFGEHÄRTETEN BAUSTOFFBLÖCKEN, SOWIE VERWENDUNG EINER SOLCHEN VORRICHTUNG**
DEVICE FOR SEPARATING STEAM-HARDENED BUILDING MATERIAL BLOCKS AND THE USE OF SUCH A DEVICE
DISPOSITIF POUR SEPARER DES BLOCS DE MATERIAU DE CONSTRUCTION, ETUVES AINSI QUE L-APPLICATION D'UN TEL DISPOSITIF

(30) Priorität: 23.02.2004 DE 102004008781
(43) Veröffentlichungstag der Anmeldung: 08.11.2006
(73) Patentinhaber: Xella Baustoffe GmbH, 47119 Duisburg (DE)
(72) Erfinder: FRITSCH, Wolfgang, 64823 Gross-Umstadt (DE); BAYER, Peter, 86561 Aresing (DE); KNIESMEIER, Heinrich, 45549 Sprockhövel (DE)
(74) Vertreter: Solf, Alexander
(86) Internationale Anmeldenummer: PCT/EP2005/001718
(87) Internationale Veröffentlichungsnummer: WO 2005/080056

(56) Entgegenhaltungen:
- EP-A- 1 027 972
- US-A- 3 758 934
- PATENT ABSTRACTS OF JAPAN Bd. 1995, Nr. 01, 28. Februar 1995 (1995-02-28) & JP 06 293433 A (YOTSUBA:KK; others: 01), 21. Oktober 1994 (1994-10-21)

## Beschreibung

Die Erfindung betrifft eine Trennvorrichtung zum Trennen von vor einer Dampfhärtung durch Schnitte in Formkörper abgeteilten Baustoffblöcken, insbesondere Poren- oder Schaumbetonblöcken, nach der Dampfhärtung, sowie deren Verwendung zum Trennen von Porenbetonblöcken.

Eine bewährte Trennvorrichtung ist aus der DE 199 05 988 A1 bekannt, worin die Merkmale des Oberbegriffs des Anspruchs 1 offenbart sind. Die bekannte Vorrichtung ist jedoch bezüglich ihrer Greifbreite zwischen den Anpressbacken der Anpresseinrichtung begrenzt auf den Ausfahrweg der die Anpressbacken betätigenden Kolbenzylindereinheiten der Anpresseinrichtung, so dass nur ein eng begrenzter Bereich der Baustoffblockbreite in der Trennvorrichtung bearbeitet werden kann.

Aus der Patentschrift US 3,758,934 geht ebenfalls eine gattungsgemäße Trennvorrichtung zum Trennen für dampfgehärtete Baustoffblöcke hervor. Diese Trennvorrichtung weist eine u-förmige Jocheinrichtung mit zwei Armpaaren auf, deren Arme jeweils endseitig Klemmbacken zum klemmenden Halten zweier zu trennender Baustoffblöcke aufweisen. Dazu sind die Arme jeweils um horizontale Achsen verschwenkbar gelagert, so dass die Klemmbacken zum Klemmen aufeinander zu und voneinander weg gefahren werden können. Zudem sind die Armpaare so ausgebildet, dass die Klemmbacken des ersten Armpaares oberhalb der Klemmbacken des zweiten Armpaares angeordnet sind, so dass mit dem ersten Armpaar ein oberer Baustoffblock und mit dem zweiten Armpaar ein darunter angeordneter Baustoffblock greifbar ist. Zum Trennen der gegriffenen Baustoffblöcke wird der eine Arm des oberen Armpaares relativ zu den anderen Armen vertikal nach oben verfahren.

Aufgabe der Erfindung ist, die aus der DE 199 05 988 A1 bekannte Trennvorrichtung so zu verändern, dass nahezu alle gängigen Baustoffblockbreiten zum Trennen bearbeitet werden können, wobei die Kräfte beim Trennen innerhalb des jeweiligen geschlossenen Kraftsystems der jochartigen Bauteile immer symmetrisch verteilt sind.

Diese Aufgabe wird durch die Merkmale des Anspruchs 1 gelöst. Vorteilhafte Weiterbildungen der Erfindung werden in den Unteransprüchen gekennzeichnet.

Aus der DE 100 63 278 C1 ist eine Trennvorrichtung bekannt, die zum Trennen von Porenbetonblöcken unterschiedlicher Breite ausgelegt ist. Diese Trennvorrichtung weist ein ortsfestes, jochförmiges, an ein Portal angeordnetes Bauteil auf, das mit einer Hebeeinrichtung zum Anheben des Porenbetonblocks von unten kombiniert ist. Die Anpressbacken stützen sich zumindest auf einer Seite des Porenbetonblocks an einem Zwischenteil ab, das innerhalb des jochförmigen Bauteils an passiven Horizontalführungen seitlich verfahrbar und absperrbar ist, und zwar mittels Stellzylindern. Das zwischenteil seinerseits stützt sich am jochförmigen Bauteil ab. Das Zwischenteil erzeugt, selbst wenn beidseits Zwischenteile vorgesehen sind, ungleichmäßige Kraftverteilungen im Jochbauteil, weil die Zwischenteile unabhängig voneinander arbeiten. Die Zwischenteil-Lösung ist für die aus der DE 199 05 988 A1 bekannte Trennvorrichtung nicht brauchbar.

Anhand der Zeichnung wird die Erfindung im Folgenden beispielhaft näher erläutert. Es zeigen:
- Figur 1:: Schematisch ein Funktionsschema einer erfindungsgemä- ßen Trennvorrichtung zum Trennen von dampfgehärteten Baustoffblöcken;
- Figur 2:: eine perspektivische Ansicht auf eine Ausführungsform der erfindungsgemäßen Trennvorrichtung.

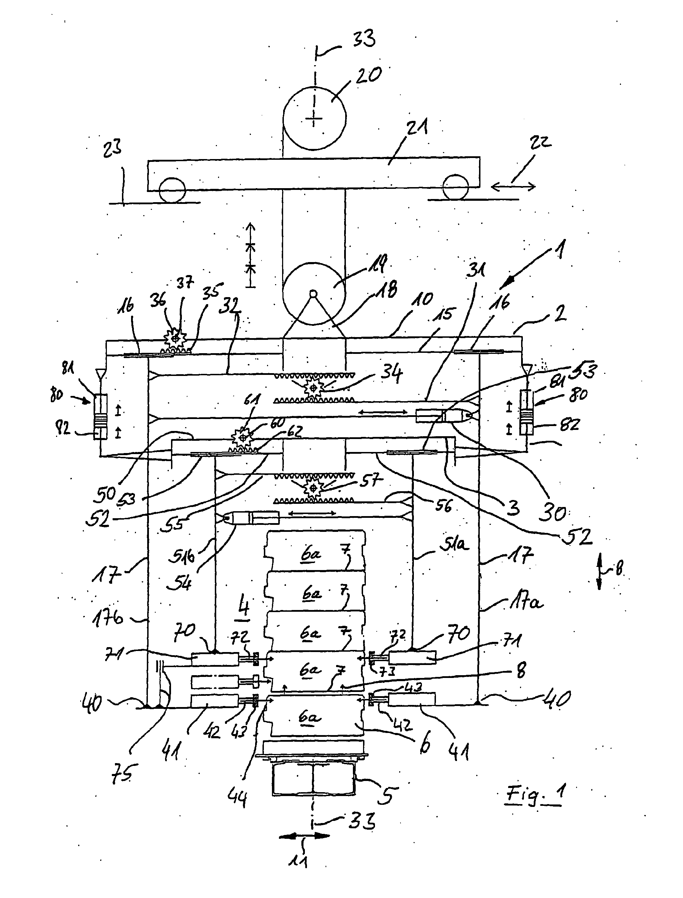

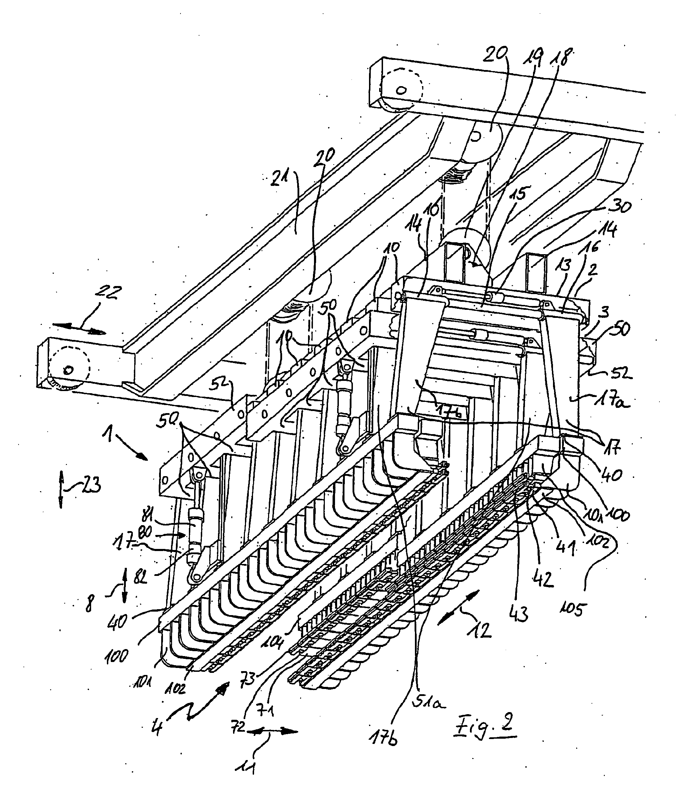

Eine erfindungsgemäße Trennvorrichtung 1, insbesondere Trennzange, zum Trennen von dampfgehärteten Baustoffblöcken (Figur 1, Figur 2) weist zumindest eine erste tunnelförmige, nach unten offene, u-förmige, insbesondere äußere, Jocheinrichtung 2 und zumindest eine zweite, tunnelförmige, u-förmige, nach unten offene, insbesondere innere, Jocheinrichtung 3 auf. Die Jocheinrichtungen 2; 3 bilden einen nach unten offenen Tunnel 4, in welchem ein auf einem Härteboden 5 angeordneter Porenbetonkuchen bzw. Porenbetonformling 6 vertikal aufgerichtet angeordnet ist.

Der Porenbetonformling 6 weist horizontale Trennfugen 7 auf, so dass der Porenbetonformling 6 aus einer Vielzahl von Porenbetonblöcken 6a, welche übereinandergestapelt auf dem Härteboden 5 angeordnet sind, aufgebaut ist. Die einzelnen Porenbetonblöcke 6a sind nach dem Härten des Porenbetonformlings 6 teilweise miteinander versintert, so dass die Porenbetonblöcke 6a nicht einfach voneinander abgehoben werden können, sondern mittels einer Trennkraft senkrecht zur Trennfugenebene der Trennfuge 7 auseinandergerissen werden müssen. Hierbei ist zur Vermeidung von Kantenumbruch besonders wichtig, dass die Trennrichtung 8 exakt senkrecht auf der Trennebene der Trennfugen 7 steht, so dass beim Trennen der einzelnen Porenbetonblöcke 6a voneinander kein Versatz der Porenbetonblöcke 6a in der Trennfugenebene erfolgt.

Die erfindungsgemäße Trennvorrichtung 1 weist zumindest je eine äußere Jocheinrichtung 2 und je eine innere Jocheinrichtung 3 auf, wobei bevorzugt eine Vielzahl, insbesondere fünf bis zehn äußere Jocheinrichtungen 2 einen ersten Jochtunnel und eine Vielzahl von inneren Jocheinrichtungen 3, insbesondere fünf bis zehn innere Jocheinrichtungen 3 einen zweiten Jochtunnel bilden. Der erste Jochtunnel und der zweite Jochtunnel fluchten in einer Tunnellängsrichtung 12 und bilden den Tunnel 4. Die Anzahl der vorhandenen äußeren und inneren Jocheinrichtungen 2; 3 hängt im wesentlichen von der Länge des Porenbetonformlings 6 ab, entlang der zwei übereinanderliegende Porenbetonblöcke 6a in Trennrichtung 8 voneinander getrennt werden sollen.

Die äußeren Jocheinrichtungen 2 weisen jeweils als Jochbalken einen Querbalken 10 sowie ein Armpaar 17 bildende Arme 17a, 17b auf. Die Querbalken 10 erstrecken sich in einer Querrichtung 11 parallel zur Trennebene der Trennfugen 7. Die Querbalken 10 sind gleichmäßig beabstandet entlang der Tunnellängsrichtung 12 aufeinanderfolgend angeordnet. Die Querbalken 10 der äußeren Jocheinrichtung 2 sind an zwei sich in Tunnellängsrichtung 12 auf einer Oberseite 13 der Querbalken 10 erstreckenden Längsträgern 14 befestigt, so dass die Längsträger 14 zusammen mit den Querbalken 10 einen festen Sprossenrahmen mit den Querbalken 10 als Sprossen bilden (vgl. Figur 2).

Die Querbalken 10 sind vorzugsweise als im wesentlichen nach unten, d.h. in Richtung zum Tunnel 4 hin geöffnete Hohlkästen ausgebildet, wobei sich im Inneren des Holkastens von einem Ende bis zum anderen Ende des Querbalkens 10 eine Gleitstange 15 parallel zur Querrichtung 11 erstreckt. Diese Gleitstange 15 kann zur höheren Stabilität auf halber Länge nochmals zum Hohlkasten 10 abgestützt sein. Auf dieser Gleitstange 15 sitzen in Querrichtung 11 verschiebliche Schiebemuffen 16, welche jeweils mit einem oberen Ende Arme 17a, 17b in Verbindung stehen (vgl. Figur 1).

Die Arme 17a, 17b sind somit jeweils über die Schiebemuffen 16 auf der Gleitstange 15 bzgl. der Querbalken 10 in Querrichtung 11 verschieblich gelagert. Jeweils ein Querbalken 10 und ein Armpaar 17 bilden eine im Abstand der Arme 17a, 17b zueinander verstellbare, nach unten offene, u-förmige Jocheinrichtung 2.

Zumindest ein Querbalken 10 steht über eine in einem Lagerbock 18 drehbar gelagerte Seilrolle 19 mit einem Hubwerk 20 eines Brückenkrans 21 in Verbindung. Sinnvollerweise ist (sind) der (die) Lagerbock (Lagerböcke) 18 der Seilrolle 19 in den Längsträgern 14 befestigt. Der Brückenkran 21 ist bevorzugt in einer Richtung 22, welche parallel zur Querrichtung 11 ausgerichtet ist, auf einer Kranbahn 23 verfahrbar angeordnet. Mittels des Brückenkrans 21 ist die gesamte Trennvorrichtung 1, wie weiter unten detaillierter beschrieben werden wird, in der Richtung 22 parallel zur Querrichtung 11 verfahrbar, sowie in einer Hubrichtung 24 parallel zur Trennrichtung 8 mittels dem Hubwerk 20 anhebbar bzw. absenkbar.

Alternativ ist eine Trennvorrichtung 1 in einem Stativ (nicht gezeigt) ortsfest lediglich in der Hubrichtung 24 verschiebbar gelagert. Oder die Trennvorrichtung ist in einem Stativ auch in der Höhe fixiert, wobei für die notwendige Hubbewegung eine Hubvorrichtung zum Anheben des Härtebodens 5 mit dem Formling 6 vorhanden ist.

Jeweils zwei zu einem Querbalken 10 gehörende Arme 17a, 17b sind in der Querrichtung 11 über einen hydraulischen Stellzylinder 30 als Antriebseinrichtung miteinander verbunden. Weiterhin steht jeweils der erste Arm 17a des Armpaares 17 mit einer ersten Zahnstange 31 in Verbindung und der zweite Arm 17b des Armpaares 17 steht mit einer zweiten Zahnstange 32 in Verbindung. Die Zahnstangen 31, 32 erstrecken sich jeweils von den Armen 17a bzw. 17b in Richtung der Querrichtung 11 hin zu einer Längsmittelebene 33 der Trennzange 1. Die Zahnstangen 31 und 32 sind im Bereich der Längsmittelebene 33 mittels eines Ritzels 34 gekoppelt und stehen derart miteinander im Eingriff, dass die Arme 17a und 17b jeweils symmetrisch zur Längsmittelebene 33 angeordnet sind und bei einer Betätigung des hydraulischen Stellzylinders 30 in der Querrichtung 11 stets synchron zueinander symmetrisch zur Längsmittelebene 33 entlang der Gleitstangen 15 verschiebbar sind. Das Ritzel 34 ist im Querbalken 10 gelagert. Die beiden Zahnstangen 31 und 32 sowie das Ritzel 34 bilden somit für je zwei Arme 17a, 17b einer Jocheinrichtung 2 eine Synchronisierungseinrichtung zur Sicherstellung einer symmetrischen synchronen Bewegung. Diese stellt somit in jedem Betriebszustand eine symmetrischen Anordnung der Arme 17a, 17b bzgl. der Längsmittelebene 33 der Trennvorrichtung 1 sicher.

Alle ersten Jocheinrichtungen 2 weisen bevorzugt im Bereich des oberen Endes eines Armes 17b eine weitere Zahnstange 35 oder ein Zahnstangensegment 35 auf, welches sich ebenfalls in Querrichtung 11 erstreckt. Jede dieser Zahnstangen 35 steht über ein Ritzel 36 mit einer Gleichlaufwelle 37, die in allen Querbalken 10 gelagert ist, in Verbindung, so dass sichergestellt ist, dass bei einer Vielzahl in Tunnellängsrichtung 12 aufeinanderfolgend angeordneten ersten Jocheinrichtungen 2 deren Arme 17a oder 17b untereinander gleichlaufend über die hydraulischen Stellzylinder 30 antreibbar verschiebbar sind. Somit bilden die Zahnstangen 35 sowie die Ritzel 36 einer jeden ersten Jocheinrichtung 2 und die Gleichlaufwelle 37 eine Gleichlaufeinrichtung, welche für eine synchrone Bewegung der Arme 17b verschiedener äußerer Jocheinrichtungen 2 sorgt. Die synchrone und symmetrisch zur Längsmittelebene 33 Zuordnung des zweiten Armes 17b erfolgt jeweils über die Synchronisierungseinrichtung 32, 31, 34 innerhalb einer Jocheinrichtung 2.

Des Weiteren stehen die Arme 17a, 17b der ersten Jocheinrichtungen 2 jeweils mit Halteeinrichtungen zum Halten eines Porenbetonblocks 6a in Verbindung. Bei den Halteeinrichtungen handelt es sich vorzugsweise um Anpresseinrichtungen 41, die im Bereich freier Enden 40 der Arme 17a, 17b angeordnet sind, und welche beispielsweise als hydraulische Kolben-ZylinderEinheit mit einer Kolbenstange 42 ausgebildet sind. Die Kolbenstange 42 weist von der Anpresseinrichtung 41 weg hin zur Längsmittelebene 33 der Trennvorrichtung 1. Am freien Ende der Kolbenstangen 42 ist ein Anpresspolster 43 angeordnet, welches mit freien Seitenflächen 44 eines Porenbetonblocks 6a wechselwirken kann, d.h. an die freie Seitenfläche 44 anpressbar ist, um so einen Porenbetonblock 6a im Zusammenspiel mit der gegenüberliegenden Anpresseinrichtung 41 festzuhalten. Die Anpresseinrichtungen 41 sind bevorzugt hydraulisch betätigte, doppelzylindrige Einrichtungen, wobei das Anpresspolster 43 bevorzugt als Anpressleiste ausgebildet ist. Jedem freien Ende 40 eines Arms 17a bzw. 17b ist zumindest eine Anpresseinheit 41 zugeordnet.

Der zweite innere Jochtunnel weist zumindest eine, bevorzugt eine Vielzahl von inneren Jocheinrichtungen 3 auf, welche jeweils einen Querbalken 50 und ein Armpaar 51 bestehend aus Armen 51a, 51b aufweisen. Jeweils in einem Zwischenraum zwischen zwei Querbalken 10 bzw. zwei Armpaaren 17 zweier äußerer Jocheinrichtungen 2 ist ein Querbalken 50 mit Armen 51a, 51b einer inneren Jocheinrichtung 3 angeordnet. Die Vielzahl der inneren Jocheinrichtungen 3 sind entlang der Tunnellängsrichtung 12 somit geschachtelt zwischen den äußeren Jocheinrichtungen 2 angeordnet. Die Querbalken 50 der inneren Jocheinrichtungen 3 sind jeweils an ihren freien Enden mittels eines Längsträgers 52, welcher außerhalb der Arme 17a, 17b in Tunnellängsrichtung 12 verläuft, verbunden.

Somit bilden die Querbalken 50 und die Längsträger 52 einen Leiterrahmen, wobei Zwischenräume zwischen zwei Querbalken 50 von den Armen 17a, 17b einer korrespondierenden äußeren Jocheinrichtung 2 durchgriffen werden (vgl. Figur 2). Somit bilden alle äußeren Jocheinrichtungen 2 und alle inneren Jocheinrichtungen 3 zusammen den Tunnel 4, in dem der gehärtete und geschnittene Porenbetonformling 6 angeordnet ist. Die äußeren Jocheinrichtungen 2 und die inneren Jocheinrichtungen 3 sind hierbei kräftemäßig voneinander vollständig entkoppelt und ineinandergeschachtelt angeordnet.

Die Querbalken 50 sind im wesentlichen wie die Querbalken 10 als nach unten, zum Tunnel 4 hin offene Hohlkästen ausgebildet, wobei sich von einem freien Ende der Querbalken 50 zum anderen freien Ende im Inneren der Hohlkästen eine Gleitstange 52 erstreckt, die zur höheren Stabilität auf halber Länge nochmals zum Hohlkasten abgestützt sein kann, auf der die Arme 51a, 51b jeweils mittels Schiebemuffen 53 in der Querrichtung 11 verschiebbar gelagert sind. Analog zu den Armen 17a, 17b sind jeweils auch die zwei gegenüberliegende Arme 51a, 51b mittels eines hydraulischen Stellzylinders 54 als Antriebseinrichtung in Querrichtung 11 gekoppelt. Außerdem sind die Arme 51a, 51b wie die Arme 17a, 17b mittels einer Synchronisierungseinrichtung aufweisend eine erste Zahnstange 55, eine zweite Zahnstange 56 und ein Ritzel 57, das im Querbalken 50 gelagert ist, derart synchron gekoppelt, dass beim Betätigen des hydraulischen Stellzylinders 54 die Arme 51a, 51b symmetrisch zur Längsmittelebene 33 in der Querrichtung 11 verschiebbar sind.

Analog zur Gleichlaufeinrichtung 35, 36, 37 der äußeren Jocheinrichtungen 2 sind die Jocheinrichtungen 3 des zweiten Jochtunnels mittels einer Gleichlaufwelle 60 gekoppelt, die in allen Querbalken gelagert ist und auf der Ritzel 61 angeordnet sind, welche mit Zahnstangen 62, die jeweils mit einem der Arme 51b in Verbindung stehen, gekoppelt sind. Hierdurch wird erreicht, dass alle Jocheinrichtungen 3 entlang der Tunnellängsrichtung 12 gleichmäßig und untereinander synchron verstellt werden können.

Des Weiteren stehen auch die Arme 51a, 51b der zweiten Jocheinrichtungen 3 jeweils mit Halteeinrichtungen zum Halten des zweiten Porenbetonblocks 6a zweier zu trennender Porenbetonblöcke 6a Verbindung. Bei den Halteeinrichtungen handelt es sich vorzugsweise ebenfalls um Anpresseinrichtungen 71, die, analog zu den Armen 17a, 17b der ersten Jocheinrichtungen 2, an freien Enden 70 der Arme 51a, 51b der zweiten Jocheinrichtungen 3 angeordnet sind und z.B. als Kolbenzylindereinrichtungen mit einer Kolbenstange 72 und einem Anpresspolster 73 ausgebildet sind. Die Anpresseinrichtungen 71 der inneren Jocheinrichtungen 3 sind in jedem Betriebszustand der Trennzange 1 vertikal oberhalb der Anpresseinrichtungen 41 der äußeren Jocheinrichtung 2 angeordnet.

Im Bereich der freien Enden 40; 70 der Arme 17a, 17b bzw. 51a, 51b ist eine Führungseinrichtung 75 angeordnet, mittels der zwei benachbarten Jocheinrichtungen 2; 3, jeweils am Ende der Trennvorrichtung 1, in Querrichtung 11 und in Längsrichtung 12 zueinander mechanisch geführt sind. Die Führungseinrichtungen 75 sind beispielsweise als Gleitführungen ausgebildet und jeweils am Ende der Trennvorrichtung 1 angeordnet, so dass insgesamt nur zwei Gleitführungen nötig sind.

In der Trennrichtung 8 sind der Jochtunnel der äußeren Jocheinrichtungen 2 und der Jochtunnel der inneren Jocheinrichtungen 3 an jeder Außenseite mit zumindest einer, insbesondere je Seite fünf hydraulischen Kolbenzylindereinrichtungen 80 gekoppelt. Die hydraulische Kolbenzylindereinheit 80 ist beispielsweise doppeltwirkend ausgebildet und weist einen Vorhubzylinder 81 und einen Trennzylinder 82 auf, deren Wirkungslinien miteinander fluchten. Der Vorhubzylinder 81 weist dabei einen größeren Hub auf als der Trennzylinder 82. Mittels dem Vorhubzylinder 81 kann eine Voreinstellung der vertikalen Lage der äußeren Jocheinrichtungen 2 zu den inneren Jocheinrichtungen 3 eingestellt werden (sogenannter Vorhub). Somit ist der vertikale Abstand der Anpresseinrichtungen 41 der äußeren Jocheinrichtung 2 zu den Anpresseinrichtungen 71 der inneren Jocheinrichtung 3 voreinstellbar. Mittels den Trennzylindern 82 sind die äußeren Jocheinrichtungen 2 gegenüber den inneren Jocheinrichtungen 3 um einen definierten Weg in Trennrichtung 8 verschiebbar.

Gemäß einer bevorzugten Ausführungsform sind alle freien Enden 40 der Arme 17b und alle freien Enden 40 der Arme 17a jeweils mit einem in Tunnellängsrichtung 12 verlaufenden Längsträger 100 verbunden. Vom Längsträger 100 aus erstrecken sich vertikal nach unten und innen Stegbleche 101, welche an deren freien Kanten ebenfalls mittels einer durchgehenden Schiene 102 in Tunnellängsrichtung 12 verbunden sind. Die Stegbleche 101 dienen als Aufnahme für die Anpresseinrichtungen 41 der äußeren Jocheinrichtungen 2. Diese Maßnahme hat den Vorteil, dass die Vielzahl der äußeren Jocheinrichtungen 2 untereinander sowohl im Bereich der Querbalken 10 als auch im Bereich der freien Enden 40 untereinander definiert beabstandet befestigt sind, so dass eine stabile Kastenstruktur ausgebildet ist. Insbesondere ist von Vorteil, dass die Breite und Teilung der Anpresseinrichtungen 41;71 jeweils von Fall zu Fall auch nachträglich an das Blockmaß angepasst werden kann, ohne die Jochkonstruktion zu ändern. Analog zu den äußeren Jocheinrichtungen 2 sind auch alle freien Enden 70 der Arme 51a und alle freien Enden 70 der Arme 51b der zweiten inneren Jocheinrichtungen 3 untereinander mittels eines Längsträgers 104, welches sich entlang der Tunnellängsrichtung 12 erstreckt, verbunden. Vom Längsträger 104 bzw. von dessen Unterseite erstrecken sich ebenfalls Stegbleche 105, welche die Anpresseinrichtungen 71 der inneren Jocheinrichtungen 3 halten. Auch diese Maßnahme bewirkt, dass die Vielzahl der inneren Jocheinrichtungen 3 als in sich stabile, verwindungssteife Kastenkonstruktion ausgebildet ist.

Im Folgenden wird die Funktionsweise der beschriebenen Trennvorrichtung 1 erläutert. Zuerst wird mittels der hydraulischen Stellzylinder 54 und 30 die lichte Weite der inneren Jocheinrichtungen 3 bzw. der äußeren Jocheinrichtungen 2 auf eine Weite größer als die Breite des zu bearbeitenden Porenbetonblocks 6 voreingestellt. Die Verfahrwege der Arme 51a, 51b; 17a, 17b werden in vorteilhafter Weise über elektronische Wegmesseinrichtungen gemessen und überwacht und geregelt bzw. gesteuert eingestellt. Über die Synchronisierungseinrichtungen 31, 32, 34 und 55, 56, 57 ist sichergestellt, dass alle Arme 17a, 17b; 51a, 51b symmetrisch zur Längsmittelebene 33 ausgerichtet sind. Über die Gleichlaufanordnungen 35, 36, 37 bzw. 60, 61, 62 ist sichergestellt, dass alle Arme der äußeren Jocheinrichtungen 2 und alle Arme der inneren Jocheinrichtungen 3 jeweils zueinander in Tunnellängsrichtung 12 fluchten.

Die Trennvorrichtung 1 wird mit dem Brückenkran 21 derart vertikal positioniert, dass der Porenbetonformling 6 im Innenbereich des Tunnels 4 zwischen jeweils gegenüberliegenden Anpresseinrichtungen 41 und 70 angeordnet ist. Die Trennvorrichtung 1 wird dabei derart positioniert, dass die Anpresseinrichtungen 41 bzw. deren Anpresspolster 43 der äußeren Jocheinrichtungen 2 freien Seitenflächen 44 eines ersten Porenbetonblocks 6a gegenüberliegen. Mittels des Vorhubzylinders 81 werden nunmehr die inneren Jocheinrichtungen 3 derart vertikal in Trennrichtung 8 bzgl. der äußeren Jocheinrichtungen 2 verfahren, dass auch die Anpresseinrichtungen 71 der inneren Jocheinrichtungen 3 auf der vertikalen Höhe geeigneter freien Flächen eines zweiten, über dem ersten Porenbetonblock 6a liegenden Porenbetonblocks 6a gegenüberliegen.

Anschließend werden, bevorzugt einmalig pro Formling, mittels der hydraulischen Stellzylinder 30 und 54 die lichten Weiten der Armpaare 17 bzw. 51 so eingestellt, dass die Anpresseinrichtungen 41, 71 zuverlässig die jeweiligen Porenbetonblöcke 6a greifen können. Danach werden die Kolbenstangen bzw. Anpresspolster der Anpresseinrichtungen 41 bzw. 71 hydraulisch ausgefahren, so dass deren jeweils zugeordnete Porenbetonblöcke 6a festgehalten werden. Zweckmäßiger Weise sind während der Dauer des Festhaltens der Porenbetonblöcke 6a die Armpaare 17; 51 bzgl. ihres Abstandes zueinander arretiert. Hierzu sind die Stellzylinder 30, 54 hydraulisch gesperrt. Anschließend werden die Trennzylinder 82 rechts und links gleichzeitig betätigt, so dass die Anpresseinrichtungen 71 und 41 in Trennrichtung 8 voneinander wegbewegt werden und somit die gegriffenen Porenbetonblöcke 6a entlang ihrer dazwischenliegenden Trennfuge 7 genau vertikal auseinandergerissen werden. Nachdem diese Trennung der Porenbetonblöcke 6a erfolgt ist, wird der Trennzylinder 82 entlastet bzw. zurückgefahren, so dass der vertikal obenliegende Porenbetonblock 6a wiederum auf den vertikal unten liegenden Porenbetonblock 6a aufgesetzt wird. Anschließend werden die Anpresseinheiten 41, 71 zurückgefahren, der Hubkran 21 hebt die gesamte Trennvorrichtung 1 auf das nächsthöhere Niveau, so dass die Anpresseinrichtungen 41 der äußeren Jocheinrichtungen 2 nunmehr mit dem von unten zweiten Porenbetonblock 6a korrespondieren und die Anpresseinrichtungen 71 der inneren Jocheinrichtungen 3 mit dem darüber liegenden dritten Porenbetonblock 6a zusammenwirken können. Ab hier wiederholt sich der Trennvorgang wie vorbeschrieben. In manchen Fällen ist es zweckmäßig in umgekehrter Richtung, d.h. von oben nach unten zu takten.

Besonders vorteilhaft bei der erfindungsgemäßen Trennvorrichtung ist, dass die erfindungsgemäße Trennvorrichtung variabel auf verschiedene Maße, insbesondere Breiten von zu verarbeiteten, d.h. zu trennenden Porenbetonblöcken 6a voreinstellbar ist. Dies gelingt durch die Bereitstellung einer Verschiebbarkeit der Jocharmpaare 17 bzw. 51 in einer Querrichtung 11, so dass die lichte Weite des Tunnels 4 in weiten Grenzen einstellbar ist. Außerdem ist es vorteilhaft, dass die beim Anpressen und Auseinanderreißen auftretenden Kräfte symmetrisch in die Jocheinrichtungen 2, 3 eingeleitet werden, so dass kein resultierendes Moment nach außen wirkt und abgestützt werden muss. Dies ermöglicht es, die Trennvorrichtung 1 z.B. mit einem Brückenkran hängend zu betätigen, da aufwändige äußere Stützmaßnahmen entfallen können.

Ein besonderer Vorteil gegenüber DE 100 63 278 C1 ist dadurch gegeben, dass die erfindungsgemäße in einem Laufkran hängende Trennvorrichtung 1 auch zum Umsetzen und Umstapeln der Porenbetonblöcke 6a genutzt werden kann, z.B. vom Härteboden 5 direkt auf Holzpaletten bzw. auf Transporteinrichtungen (z.B. Förderrollen) zur Weiterbearbeitung der Blöcke 6a. Es entfällt dadurch ein zusätzlicher Laufkran mit entsprechenden Greifarmen.

## Patentansprüche

1. Trennvorrichtung (1), insbesondere Trennzange, zum Trennen von dampfgehärteten Baustoffblöcken (6a) eines Baustoffformlings (6) in einer vertikalen Trennrichtung (8) mit zumindest einer ersten u-förmigen Jocheinrichtung (2) und zumindest einer zweiten u-förmigen Jocheinrichtung (3), welche in Trennrichtung (8) zueinander antreibbar bewegbar sind, wobei die Jocheinrichtungen (2; 3) jeweils einen sich in einer horizontalen Querrichtung (11) erstreckenden Jochbalken (10; 50) und Armpaare (17; 51) bildende Arme (17a, 17b; 51a, 51b) aufweisen, die mit Halteeinrichtungen (41; 71) zum Halten zweier voneinander zu trennenden Baustoffblöcke (6a) in Verbindung stehen, **dadurch gekennzeichnet, dass** die Arme (17a, 17b; 51a, 51b) bzgl. der korrespondierenden Jochbalken (10; 50) in Querrichtung (11) verschiebbar gelagert sind.

2. Trennvorrichtung nach Anspruch 1, **dadurch gekennzeichnet, dass** die Arme (17a, 17b; 51a, 51b) einer Jocheinrichtung (2; 3) mittels einer Synchronisierungseinrichtung (31, 32, 34; 55, 56, 57) gekoppelt sind, so dass die Arme (17a, 17b; 51a, 51b) bzgl. einer Längsmittelebene (33) der Trennvorrichtung (1) symmetrisch verschiebbar sind.

3. Trennvorrichtung nach Anspruch 1 und/oder 2, **dadurch gekennzeichnet, dass** jeweils ein Arm (17b; 51b) mehrerer Jocheinrichtungen (2; 3) über eine Gleichlaufeinrichtung (35, 36, 37; 60, 61, 62)) gekoppelt sind.

4. Trennvorrichtung nach einem oder mehreren der vorhergehenden Ansprüche, **dadurch gekennzeichnet, dass** eine Vielzahl von ersten Jocheinrichtungen (2) einen ersten Jochtunnel und eine Vielzahl von zweiten Jocheinrichtungen (3) einen zweiten Jochtunnel bilden, welche ineinandergeschachtelt den Tunnel (4) bilden.

5. Trennvorrichtung nach einem oder mehreren der vorhergehenden Ansprüche, **dadurch gekennzeichnet, dass** die erste(n) Jocheinrichtung(en) (2) als Jochbalken einen Querbalken (10) aufweist (aufweisen), wobei sich der Querbalken (10) in Querrichtung (11) parallel zu einer Trennebene einer zwischen zwei aufeinander angeordneten Baustoffblöcken gebildeten Trennfuge (7) erstreckt.

6. Trennvorrichtung nach Anspruch 5, **dadurch gekennzeichnet, dass** die Querbalken (10) der ersten Jocheinrichtungen (2) zueinander gleichmäßig beabstandet entlang einer Tunnellängsrichtung (12) aufeinanderfolgend angeordnet sind, wobei die Querbalken (10) mittels sich in Tunnellängsrichtung (12) auf einer Oberseite (13) der Querbalken (10) erstreckenden Längsträgern (14) verbunden sind, so dass die Längsträger (14) zusammen mit den Querbalken (10) einen festen Sprossenrahmen bilden.

7. Trennvorrichtung nach Anspruch 5 und/oder 6, **dadurch gekennzeichnet, dass** die Querbalken (10) als nach unten hin geöffnete Hohlkästen ausgebildet sind, wobei sich im Inneren des Holkastens von einem Ende bis zum anderen Ende des Querbalkens (10) eine Gleitstange (15) parallel zur Querrichtung (11) erstreckt.

8. Trennvorrichtung nach Anspruch 7, **dadurch gekennzeichnet, dass** auf der Gleitstange (15) in Querrichtung (11) verschiebliche Schiebemuffen (16, 17) angeordnet sind, welche jeweils mit einem oberen Ende der Arme (17a, 17b) in Verbindung stehen.

9. Trennvorrichtung nach einem oder mehreren der Ansprüche 5 bis 8, **dadurch gekennzeichnet, dass** zumindest ein Querbalken (10) über eine in einem Lagerbock (18) drehbar gelagerte Seilrolle mit einem Hubwerk (20) eines Brückenkrans (21) in Verbindung steht.

10. Trennvorrichtung nach Anspruch 9, **dadurch gekennzeichnet, dass** der Brückenkran (21) bevorzugt in einer Richtung (22) parallel zur Querrichtung (11) verfahrbar ist.

11. Trennvorrichtung nach Anspruch 9 und/oder 10, **dadurch gekennzeichnet, dass** die Trennvorrichtung (1) in einer Hubrichtung (24) parallel zur Trennrichtung (8) mittels dem Hubwerk (20) anhebbar bzw. absenkbar ist.

12. Trennvorrichtung nach Anspruch 11, **dadurch gekennzeichnet, dass** die Trennvorrichtung (1) in einem Stativ ortfest, lediglich in der Hubrichtung (24) anhebbar bzw. absenkbar gelagert ist oder die Trennvorrichtung (1) ortsfest in einem Stativ auch in der Höhe fixiert ist, wobei für die notwendige Hubbewegung eine Hubvorrichtung zum Anheben eines Härtebodens (5) mit dem Formling (6) vorhanden ist.

13. Trennvorrichtung nach einem oder mehreren der Ansprüche 5 bis 12, **dadurch gekennzeichnet, dass** jeweils zwei zu einem Querbalken (10) gehörende Arme (17a, 17b) in der Querrichtung (11) über einen hydraulischen Stellzylinder (30) als Antriebseinrichtung miteinander verbunden sind.

14. Trennvorrichtung nach einem oder mehreren der Ansprüche 5 bis 13, **dadurch gekennzeichnet, dass** der erste Arm (17a) einer ersten Jocheinrichtung (2) mit einer ersten Zahnstange (31) in Verbindung steht, der zweite Arm (17b) einer ersten Jocheinrichtung (2) mit einer zweiten Zahnstange (32) in Verbindung steht und die Zahnstangen (31, 22) sich jeweils in der Richtung der Querrichtung (11) erstrecken und mittels eines Ritzels (34), welches am Querbalken (10) gelagert ist, gekoppelt sind.

15. Trennvorrichtung nach Anspruch 14, **dadurch gekennzeichnet, dass** die Kopplung derart eingerichtet ist, dass die Arme (17a, 17b) jeweils symmetrisch zur Längsmittelebene (33) angeordnet sind und somit synchron zueinander symmetrisch zur Längsmittelebene (33) entlang der Gleitstangen (15) verschiebbar sind.

16. Trennvorrichtung nach einem oder mehreren der Ansprüche 5 bis 15, **dadurch gekennzeichnet, dass** alle ersten Jocheinrichtungen (2) im Bereich des oberen Endes eines Armes (17b) eine Zahnstange (35) aufweisen, welche sich in Querrichtung (11) erstreckt, wobei jede dieser Zahnstangen (35) über ein Ritzel (36) mit einer Gleichlaufwelle (37), welche an allen Querbalken (10) gelagert ist, in Verbindung steht, so dass die Gleichlaufeinrichtung (35, 36, 37) gebildet ist.

17. Trennvorrichtung nach einem oder mehreren der vorhergehenden Ansprüche, **dadurch gekennzeichnet, dass** im Bereich freier Enden (40) der Arme (17a, 17b) der ersten Jocheinrichtungen (2) eine als Halteeinrichtung dienende Anpresseinrichtung (41) angeordnet ist, welche als hydraulische Kolbenzylindereinheit mit einer Kolbenstange (42) ausgebildet ist, wobei die Kolbenstange (42) von der Anpresseinrichtung (41) weg hin zur Längsmittelebene (33) der Trennzange (1) weist.

18. Trennvorrichtung nach Anspruch 17, **dadurch gekennzeichnet, dass** am freien Ende der Kolbenstangen (42) ein Anpresspolster (43) angeordnet ist, welches mit der freien Seitenfläche (44) eines Porenbetonblocks (6a) wechselwirken kann.

19. Trennvorrichtung nach Anspruch 17 und/oder 18, **dadurch gekennzeichnet, dass** die Anpresseinrichtung (41) hydraulisch betätigte Einrichtungen sind, insbesondere doppelt wirkende Zylinder sind.

20. Trennvorrichtung nach einem oder mehreren der Ansprüche 17 bis 19, **dadurch gekennzeichnet, dass** jedem freien Ende eines Arms (17a, 17b) zumindest eine Anpresseinheit (41) zugeordnet ist.

21. Trennvorrichtung nach einem oder mehreren der Ansprüche 4 bis 20, **dadurch gekennzeichnet, dass** der zweite innere Jochtunnel zumindest eine zweite Jocheinrichtung (3) aufweist, welche einen Querbalken (50) und ein Armpaar (51) bestehend aus Armen (51a, 51b) aufweist.

22. Trennvorrichtung nach Anspruch 21, **dadurch gekennzeichnet, dass** jeweils in einem Zwischenraum zwischen zwei Querbalken (10) bzw. zwei Armpaaren (17) zweier erster, äußerer Jocheinrichtungen (2) ein Querbalken (50) mit Armen (51a, 51b) einer zweiten, inneren Jocheinrichtung (3) angeordnet ist, so dass die Vielzahl der inneren Jocheinrichtungen (3) entlang der Tunnellängsrichtung (12), geschachtelt zwischen den äußeren Jocheinrichtungen (2) angeordnet ist.

23. Trennvorrichtung nach Anspruch 22, **dadurch gekennzeichnet, dass** die Querbalken (50) der inneren Jocheinrichtungen (3) jeweils an ihren freien Enden mittels eines Längsträgers (52), welcher außerhalb der Arme (17a, 17b) der äußeren Jocheinrichtungen (2) in Tunnellängsrichtung (12) verläuft, verbunden sind, so dass die Querbalken (50) und die Längsträger (52) einen Leiterrahmen bilden.

24. Trennvorrichtung nach einem oder mehreren der Ansprüche 21 bis 23, **dadurch gekennzeichnet, dass** die Arme (17a, 17b) einer äußeren Jocheinrichtung (2) Zwischenräume zwischen zwei Querbalken (50) der inneren Jocheinrichtungen (3) durchgreifen.

25. Trennvorrichtung nach einem oder mehreren der vorhergehenden Ansprüche, **dadurch gekennzeichnet, dass** die ersten, äußeren Jocheinrichtungen (2) und die zweiten, inneren Jocheinrichtungen (3) kräftemäßig voneinander vollständig entkoppelt sind.

26. Trennvorrichtung nach einem oder mehreren der Ansprüche 21 bis 25, **dadurch gekennzeichnet, dass** die Querbalken (50) der inneren Jocheinrichtungen (3) als nach unten, zum Tunnel (4) hin offene Hohlkästen ausgebildet sind, wobei sich von einem freien Ende der Querbalken (50) zum anderen freien Ende im Inneren der Hohlkästen eine Gleitstange (52) erstreckt, auf der die Arme (51a, 51b) mittels Schiebemuffen (53) in der Querrichtung (11) verschiebbar gelagert sind.

27. Trennvorrichtung nach einem oder mehreren der Ansprüche 21 bis 26, **dadurch gekennzeichnet, dass** die Arme (51a, 51b) eines Querbalkens (50) der inneren Jocheinrichtungen (3) mittels eines hydraulischen Stellzylinders (54) in Querrichtung (11) gekoppelt sind.

28. Trennvorrichtung nach einem oder mehreren der Ansprüche 21 bis 27, **dadurch gekennzeichnet, dass** die Arme (51a, 51b) eines Querbalkens (50) der inneren Jocheinrichtungen (3) mittels der Synchronisierungseinrichtung aufweisend eine erste Zahnstange (55), eine zweite Zahnstange (56) und ein Ritzel (57) synchron symmetrisch gekoppelt sind, wobei das Ritzel (57) im Querbalken (50) gelagert ist.

29. Trennvorrichtung nach einem oder mehreren der Ansprüche 21 bis 28, **dadurch gekennzeichnet, dass** die inneren Jocheinrichtungen (3) des zweiten Jochtunnels mittels einer Gleichlaufwelle (60) gekoppelt sind, auf der Ritzel (61) angeordnet sind, welche mit Zahnstangen (62), die jeweils mit einem der Arme (51b) der Querbalken (50) der inneren Jocheinrichtungen (3) in Verbindung stehen, gekoppelt sind, wobei die Gleichlaufwelle (10) in allen Querbalken (50) gelagert ist.

30. Trennvorrichtung nach einem oder mehreren der Ansprüche 21 bis 29, **dadurch gekennzeichnet, dass** an freien Enden (70) der Arme (51a, 51b) der Querbalken (50) der inneren Jocheinrichtungen (3) als Halteeinrichtungen dienende Anpresseinrichtungen (71) angeordnet sind, welche als Kolbenzylindereinrichtungen mit einer Kolbenstange (72) und einem Anpresspolster (73) ausgebildet sind.

31. Trennvorrichtung nach Anspruch 30, **dadurch gekennzeichnet, dass** die Anpresseinrichtungen (71) der inneren Jocheinrichtungen (3) vertikal oberhalb der Anpresseinrichtung (41) der äußeren Jocheinrichtung (2) angeordnet sind.

32. Trennvorrichtung nach einem oder mehreren der Ansprüche 21 bis 31, **dadurch gekennzeichnet, dass** im Bereich der freien Enden (40; 70) der Arme (17a, 17b; 51a, 51b) eine Führungseinrichtung (75) angeordnet ist, mittels der jeweils zwei benachbarte Jocheinrichtungen (2; 3) in Querrichtung (11) und in Längsrichtung (12) zueinander mechanisch geführt sind, wobei insbesondere nur je eine an den Enden der Trennvorrichtung (1) vorgesehen ist.

33. Trennvorrichtung nach Anspruch 32, **dadurch gekennzeichnet, dass** die Führungseinrichtungen (75) als Gleitführungen ausgebildet sind.

34. Trennvorrichtung nach einem oder mehreren der vorhergehenden Ansprüche, **dadurch gekennzeichnet, dass** der Jochtunnel der äußeren Jocheinrichtungen (2) und der Jochtunnel der inneren Jocheinrichtungen (3) an jeder Außenseite mit zumindest einer hydraulischen Kolbenzylindereinrichtung (80) gekoppelt sind, welche in eine Wirkungsrichtung parallel zur Trennrichtung (8) aufweisen.

35. Trennvorrichtung nach Anspruch 34, **dadurch gekennzeichnet, dass** die hydraulische Kolbenzylindereinrichtung (80) eine doppeltwirkende Kolbenzylindereinheit mit einem Vorhubzylinder (81) und einem Trennzylinder (82) ist, deren Wirkungslinien miteinander fluchten.

36. Trennvorrichtung nach Anspruch 35, **dadurch gekennzeichnet, dass** der Vorhubzylinder (81) einen größeren Hub aufweist als der Trennzylinder (82).

37. Trennvorrichtung nach einem oder mehreren der Ansprüche 6 bis 36, **dadurch gekennzeichnet, dass** die freien Enden (40) der Arme (17a, 17b) der äußeren Jocheinrichtungen (2) jeweils mittels einem in Tunnellängsrichtung (12) verlaufenden Längsträger (100) verbunden sind und sich vom Längsträger (100) vertikal nach unten und innen Stegbleche (101) erstrecken, welche an deren freien Kanten mittels einer durchgehenden Schiene (102) in Tunnellängsrichtung (12) verbunden sind.

38. Trennvorrichtung nach Anspruch 37, **dadurch gekennzeichnet, dass** die Stegbleche (101) als Aufnahme für die Anpresseinrichtungen (41) der äußeren Jocheinrichtungen (2) dienen.

39. Verwendung einer Trennvorrichtung (1) nach einem oder mehreren der vorhergehenden Ansprüche zum Trennen von Porenbetonblöcken (6a), die einen Porenbetonformling (6) bilden, wobei zwischen den Porenbetonblöcken (6a) Trennfugen (7) angeordnet sind, wobei die Porenbetonblöcke (6a) übereinandergestapelt auf einem Härteboden (5) angeordnet sind.

## Claims

1. A separating device (1), in particular separating grippers, for separating steam-hardened construction material blocks (6a) of a construction material casting (6) in a vertical separating direction (8), having at least one first U-shaped yoke device (2) and at least one second U-shaped yoke device (3), these yoke devices being driveably movable in relation to one another in the separating direction (8), wherein the yoke devices (2; 3) have a respective yoke beam (10; 50) extending in a horizontal transverse direction (11) and respective arms (17a, 17b; 51 a, 51 b) forming arm pairs (17; 51), which arms are connected to holding devices (41; 71) for holding two construction material blocks (6a) to be separated from one another, **characterised in that** the arms (17a, 17b; 51a, 51 b) are mounted so as to be displaceable in the transverse direction (11) with regard to the corresponding yoke beams (10; 50).

2. A separating device according to claim 1, **characterised in that** the arms (17a, 17b; 51 a, 51 b) of a yoke device (2; 3) are coupled by means of a synchronising device (31, 32, 34; 55, 56, 57), so that the arms (17a, 17b; 51a, 51 b) are symmetrically displaceable with regard to a longitudinal centre plane (33) of the separating device (1).

3. A separating device according to claim 1 and/or 2, **characterised in that** one arm (17b; 51 b) in each case of a plurality of yoke devices (2; 3) are coupled via a synchronising device (35, 36, 37; 60, 61, 62).

4. A separating device according to one or more of the preceding claims, **characterised in that** a plurality of first yoke devices (2) form a first yoke tunnel and a plurality of second yoke devices (3) form a second yoke tunnel, which tunnels nested into one another form the tunnel (4).

5. A separating device according to one or more of the preceding claims, **characterised in that** the first yoke device(s) (2) has/have a traverse (10) as a yoke beam, wherein in the transverse direction (11), the traverse (10) extends parallel to a parting plane of a parting line (7) formed between two construction material blocks arranged on top of one another.

6. A separating device according to claim 5, **characterised in that** the traverses (10) of the first yoke devices (2) are arranged one after another along a tunnel longitudinal direction (12) at uniform spacing from one another, wherein the traverses (10) are connected by means of longitudinal girders (14), extending in the tunnel longitudinal direction (12) on one upper side (13) of the traverses (10), so that the longitudinal girders (14) form a secure ladder frame together with the traverses (10).

7. A separating device according to claim 5 and/or 6, **characterised in that** the traverses (10) are in the form of downwardly-open box girders, wherein within the box girder, a slide bar (15) extends from one end to the other end of the traverse (10) in a manner parallel to the transverse direction (11).

8. A separating device according to claim 7, **characterised in that** sliding sleeves (16, 17[sic]) are arranged on the slide bar (15) so as to be displaceable in the transverse direction (11), which sliding sleeves are connected to a respective upper end of the arms (17a, 17b).

9. A separating device according to one or more of claims 5 to 8, **characterised in that** at least one traverse (10) is connected to a lifting mechanism (20) of an overhead crane (21) via a cable pulley rotatably mounted in a bearing mounting (18).

10. A separating device according to claim 9, **characterised in that** the overhead crane (21) is preferably movable in a direction (22) parallel to the transverse direction (11).

11. A separating device according to claim 9 and/or 10, **characterised in that** the separating device (1) can be raised or lowered in a lifting direction (24) parallel to the separating direction (8) by means of the lifting mechanism (20).

12. A separating device according to claim 11, **characterised in that** the separating device (1) is mounted in a stand so as to be fixed and only raisable or lowerable in the lifting direction (24) or the separating device (1) is secured in a stand so as to be fixed vertically too, wherein a lifting device for raising a hardening base (5) with the casting (6) is present for the necessary lifting movement.

13. A separating device according to one or more of claims 5 to 12, **characterised in that** in each case two arms (17a, 17b) belonging to a traverse (10) are connected to one another in the transverse direction (11) via an hydraulic adjusting cylinder (30) as a drive device.

14. A separating device according to one or more of claims 5 to 13, **characterised in that** the first arm (17a) of a first yoke device (2) is connected to a first rack (31), the second arm (17b) of a first yoke device (2) is connected to a second rack (32) and the racks (31, 32) each extend in the direction of the transverse direction (11) and are coupled by means of a pinion (34) mounted on the traverse (10).

15. A separating device according to claim 14, **characterised in that** the coupling is arranged such that the arms (17a, 17b) are each arranged symmetrically to the longitudinal centre plane and consequently are synchronously displaceable along the slide bars (15) in a manner symmetrical to the longitudinal centre plane (33).

16. A separating device according to one or more of claims 5 to 15, **characterised in that** all first yoke devices (2) have a rack (35) in the region of the upper end of an arm (17b), which rack extends in the transverse direction (11), wherein each of these racks (35) is connected via a pinion (36) to a synchronising shaft (37) mounted on all traverses (10), so that the synchronising device (35, 36, 37) is formed.

17. A separating device according to one or more of the preceding claims, **characterised in that** a pressure device (41) serving as a holding device is arranged in the region of free ends (40) of the arms (17a, 17b) of the first yoke devices (2), which pressure device is in the form of an hydraulic piston/cylinder unit with a piston rod (42), wherein the piston rod (42) points away from the pressure device (41), towards the longitudinal centre plane (33) of the separating gripper (1).

18. A separating device according to claim 17, **characterised in that** a pressure pad (43) is arranged at the free end of the piston rods (42) and can interact with the free lateral surface (44) of a porous concrete block (6a).

19. A separating device according to claim 17 and/or 18, **characterised in that** the pressure devices (41) are hydraulically actuated devices, in particular double-acting cylinders.

20. A separating device according to one or more of claims 17 to 19, **characterised in that** at least one pressure unit (41) is associated with each free end of an arm (17a, 17b).

21. A separating device according to one or more of claims 4 to 20, **characterised in that** the second, inner yoke tunnel has at least one second yoke device (3) having a traverse (50) and an arm pair (51) consisting of arms (51 a, 51 b).

22. A separating device according to claim 21, **characterised in that** in each case a traverse (50) with arms (51 a, 51 b) of a second, inner yoke device (3) is arranged in an intermediate space between two traverses (10) or two arm pairs (17) of two first, outer yoke devices (2), so that the large number of the inner yoke devices (3) is arranged along the tunnel longitudinal direction (12), nested between the outer yoke devices (2).

23. A separating device according to claim 22, **characterised in that** the traverses (50) of the inner yoke devices (3) are in each case connected at their free ends by means of a longitudinal girder (52) running outside of the arms (17a, 17b) of the outer yoke devices (2) in the tunnel longitudinal direction (12), so that the traverses (50) and the longitudinal girders (52) form a ladder frame.

24. A separating device according to one or more of claims 21 to 23, **characterised in that** the arms (17a, 17b) of an outer yoke device (2) reach through intermediate spaces between two traverses (50) of the inner yoke devices (3).

25. A separating device according to one or more of the preceding claims, **characterised in that** the first, outer yoke devices (2) and the second, inner yoke devices (3) are completely uncoupled from one another as regards force.

26. A separating device according to one or more of claims 21 to 25, **characterised in that** the traverses (50) of the inner yoke devices (3) are in the form of box girders which are open downwardly in the direction of the tunnel (4), wherein a slide bar (52) extends within the box girders from one free end of the traverses (50) to the other free end thereof, the arms (51 a, 51 b) being mounted on the slide bar (52) by means of sliding sleeves (53) so as to be displaceable in the transverse direction (11).

27. A separating device according to one or more of claims 21 to 26, **characterised in that** the arms (51 a, 51 b) of a traverse (50) of the inner yoke devices (3) are coupled in the transverse direction (11) by means of an hydraulic adjusting cylinder (54).

28. A separating device according to one or more of claims 21 to 27, **characterised in that** the arms (51 a, 51 b) of a traverse (50) of the inner yoke devices (3) are synchronously, symmetrically coupled by means of the synchronising device having a first rack (55), a second rack (56) and a pinion (57), wherein the pinion (57) is mounted in the traverse (50).

29. A separating device according to one or more of claims 21 to 28, **characterised in that** the inner yoke devices (3) of the second yoke tunnel are coupled by means of a synchronising shaft (60) on which there are arranged pinions (61) which are coupled with racks (62) connected in each case to one of the arms (51 b) of the traverses (50) of the inner yoke devices (3), wherein the synchronising shaft (10) is mounted in all traverses (50).

30. A separating device according to one or more of claims 21 to 29, **characterised in that** pressure devices (71) serving as holding devices are arranged at free ends (70) of the arms (51 a, 51 b) of the traverses (50) of the inner yoke devices (3), which pressure devices are in the form of piston/cylinder devices with a piston rod (72) and a pressure pad (73).

31. A separating device according to claim 30, **characterised in that** the pressure devices (71) of the inner yoke devices (3) are arranged vertically above the pressure devices (41) of the outer yoke device (2).

32. A separating device according to one or more of claims 21 to 31, **characterised in that** a guide device (75) is arranged in the region of the free ends (40; 70) of the arms (17a, 17b; 51 a, 51 b), by means of which guide device (75) in each case two adjacent yoke devices (2; 3) are mechanically guided in relation to one another in the transverse direction (11) and in the longitudinal direction (12), wherein in particular only one guide device is provided at each end of the separating device (1).

33. A separating device according to claim 32, **characterised in that** the guide devices (75) are in the form of sliding guides.

34. A separating device according to one or more of the preceding claims, **characterised in that** the yoke tunnel of the outer yoke devices (2) and the yoke tunnel of the inner yoke devices (3) are coupled at each exterior by at least one hydraulic piston/cylinder device (80) which point in a direction of action parallel to the separating direction (8).

35. A separating device according to claim 34, **characterised in that** the hydraulic piston/cylinder device (80) is a double-acting piston/cylinder unit with a pre-lifting cylinder (81) and a separating cylinder (82) whose lines of action are in alignment.

36. A separating device according to claim 35, **characterised in that** the pre-lifting cylinder (81) has a greater stroke than the separating cylinder (82).

37. A separating device according to one or more of claims 6 to 36, **characterised in that** in each case the free ends (40) of the arms (17a, 17b) of the outer yoke devices (2) are connected by a longitudinal girder (100) running in the tunnel longitudinal direction (12) and web plates (101) extend vertically downwards and inwards from the longitudinal girder (100), which web plates (101) are in the tunnel longitudinal direction (12) connected at their free edges by means of a continuous rail (102).

38. A separating device according to claim 37, **characterised in that** the web plates (101) serve as a receiver for the pressure devices (41) of the outer yoke devices (2).

39. Use of a separating device (1) according to one or more of the preceding claims for separating porous concrete blocks (6a) forming a porous concrete casting (6), wherein parting lines (7) are arranged between the porous concrete blocks (6a), wherein the porous concrete blocks (6a) are arranged stacked one upon the other on a hardening base (5).

## Revendications

1. Dispositif de séparation (1), en particulier une pince, destiné à séparer des blocs de matériau de construction durcis à la vapeur (6a) d'un aggloméré de matériau de construction (6) dans un sens de séparation vertical (8), comportant au moins un premier dispositif en étrier en forme de U (2) et au moins un second dispositif en étrier en forme de U (3), lesquels sont déplaçables par entraînement, l'un par rapport à l'autre, dans le sens de séparation (8), les dispositifs en étrier (2 ; 3) présentant chacun une longrine (10 ; 50) s'étendant dans un sens transversal horizontal (11) et des bras (17a, 17b ; 51a, 51b) formant des paires de bras (17 ; 51), bras qui sont reliés à des dispositifs de maintien (41 ; 71) pour maintenir deux blocs de matériau de construction (6a) à séparer l'un de l'autre, **caractérisé en ce que** les bras (17a, 17b ; 51a, 51b) sont montés de manière à pouvoir être déplacés dans le sens transversal (11) par rapport à la longrine correspondante (10 ; 50).

2. Dispositif de séparation selon la revendication 1, **caractérisé en ce que** les bras (17a, 17b ; 51a, 51b) d'un dispositif en étrier (2 ; 3) sont couplés au moyen d'un dispositif de synchronisation (31, 32, 34 ; 55, 56, 57) de telle sorte que les bras (17a, 17b ; 51a, 51b) soient déplaçables de manière symétrique par rapport à un plan médian longitudinal (33) du dispositif de séparation (1).

3. Dispositif de séparation selon la revendication 1 et/ou 2, **caractérisé en ce que** les bras (17b ; 51b) de plusieurs dispositifs en étrier (2 ; 3) sont couplés par le biais d'un système de synchronisation (35, 36, 37 ; 60, 61, 62).

4. Dispositif de séparation selon l'une quelconque ou plusieurs des revendications précédentes, **caractérisé en ce qu'**une pluralité de premiers dispositifs en étrier (2) forme un premier tunnel en étrier et **en ce qu'**une pluralité de seconds dispositifs en étrier (3) forme un second tunnel en étrier, lesquels forment le tunnel (4) lorsqu'ils sont imbriqués.

5. Dispositif de séparation selon l'une quelconque ou plusieurs des revendications précédentes, **caractérisé en ce que** le(s) premier(s) dispositif(s) en étrier (2) présente(nt) une traverse (10) en tant que longrine, la traverse (10) s'étendant, dans le sens transversal (11), parallèlement à un plan de séparation d'un joint (7) formé entre deux blocs de matériau de construction disposés l'un sur l'autre.

6. Dispositif de séparation selon la revendication 5, **caractérisé en ce que** les traverses (10) des premiers dispositifs en étrier (2) sont disposées à la suite, à une distance égale les unes des autres, le long d'un sens longitudinal du tunnel (12), les traverses (10) étant raccordées au moyen de poutres longitudinales (14) s'étendant dans le sens longitudinal du tunnel (12), sur une face supérieure (13) des traverses (10) de telle sorte que les poutres longitudinales (14) forment un cadre à barreaux fixe conjointement aux traverses (10).

7. Dispositif de séparation selon la revendication 5 et/ou 6, **caractérisé en ce que** les traverses (10) sont réalisées sous la forme de poutres caissons ouvertes vers le bas, une glissière (15) s'étendant parallèlement au sens transversal (11), à l'intérieur de la poutre caisson, d'une extrémité à l'autre extrémité de la traverse (10).

8. Dispositif de séparation selon la revendication 7, **caractérisé en ce qu'**on a disposé, sur la glissière (15), des manchons coulissants (16, 17) mobiles dans le sens transversal (11), manchons qui sont chacun reliés à une extrémité supérieure des bras (17a, 17b).

9. Dispositif de séparation selon l'une quelconque ou plusieurs des revendications 5 à 8, **caractérisé en ce qu'**au moins une traverse (10) est reliée, par le biais d'une poulie à câble logée de manière à pouvoir tourner dans un support de palier (18), à un mécanisme de levage (20) d'une grue portique (21).

10. Dispositif de séparation selon la revendication 9, **caractérisé en ce que** la grue portique (21) peut être déplacée de préférence dans un sens (22) parallèle au sens transversal (11).

11. Dispositif de séparation selon la revendication 9 et/ou 10, **caractérisé en ce que** le dispositif de séparation (1) peut être soulevé ou abaissé dans un sens de levage (24), parallèlement au sens de séparation (8), au moyen du mécanisme de levage (20).

12. Dispositif de séparation selon la revendication 11, **caractérisé en ce que** le dispositif de séparation (1) est logé de manière fixe dans un support, de façon à pouvoir être soulevé ou abaissé uniquement dans le sens de levage (24), ou **en ce que** le dispositif de séparation (1) est également fixé en hauteur de manière stationnaire dans un support, un dispositif de levage étant en place pour le mouvement de levage nécessaire afin de soulever un fond dur (5) avec l'aggloméré (6).

13. Dispositif de séparation selon l'une quelconque ou plusieurs des revendications 5 à 12, **caractérisé en ce que** deux bras (17a, 17b) faisant partie d'une traverse (10) sont reliés dans le sens transversal (11) par le biais d'un vérin hydraulique (30) en tant que dispositif d'entraînement.

14. Dispositif de séparation selon l'une quelconque ou plusieurs des revendications 5 à 13, **caractérisé en ce que** le premier bras (17a) d'un premier dispositif en étrier (2) est relié à une première crémaillère (31), le second bras (17b) d'un premier dispositif en étrier (2) est relié à une seconde crémaillère (32) et les crémaillères (31, 32) s'étendent chacune en direction du sens transversal (11) et sont couplées au moyen d'un pignon (34), lequel est monté sur la traverse (10).

15. Dispositif de séparation selon la revendication 14, **caractérisé en ce que** l'accouplement est aménagé de telle sorte que les bras (17a, 17b) soient chacun disposés de manière symétrique au plan médian longitudinal (33) et puissent être ainsi déplacés de manière synchrone l'un par rapport à l'autre, symétriquement au plan médian longitudinal (33), le long des glissières (15).

16. Dispositif de séparation selon l'une quelconque ou plusieurs des revendications 5 à 15, **caractérisé en ce que** tous les premiers dispositifs en étrier (2) comportent, au niveau de l'extrémité supérieure d'un bras (17b), une crémaillère (35), laquelle s'étend dans le sens transversal (11), chacune de ces crémaillères (35) étant reliées, par le biais d'un pignon (36), à un arbre de synchronisation (37), lequel est monté sur toutes les traverses (10) de manière à former le dispositif de synchronisation (35, 36, 37).

17. Dispositif de séparation selon l'une quelconque ou plusieurs des revendications précédentes, **caractérisé en ce que**, au niveau des extrémités libres (40) des bras (17a, 17b) des premiers dispositifs en étrier (2), on a placé un dispositif de serrage (41) servant de dispositif de maintien, lequel est réalisé sous la forme d'une unité de vérin à piston hydraulique avec une tige de piston (42), la tige de piston (42) partant du dispositif de serrage (41) pour rejoindre le plan médian longitudinal (33) de la pince (1).

18. Dispositif de séparation selon la revendication 17, **caractérisé en ce qu'**on a disposé, sur l'extrémité libre des tiges de piston (42), un coussinet de serrage (43), lequel interagit avec la surface latérale libre (44) d'un bloc de béton cellulaire (6a).

19. Dispositif de séparation selon la revendication 17 et/ou 18, **caractérisé en ce que** les dispositifs de serrage (41) sont des dispositifs à actionnement hydraulique, en particulier des vérins à double action.

20. Dispositif de séparation selon l'une quelconque ou plusieurs des revendications 17 à 19, **caractérisé en ce qu'**on a attribué, à chaque extrémité libre d'un bras (17a, 17b), au moins une unité de serrage (41).

21. Dispositif de séparation selon l'une quelconque ou plusieurs des revendications 4 à 20, **caractérisé en ce que** le second tunnel en étrier interne comporte au moins un second dispositif en étrier (3), lequel présente une traverse (50) et une paire de bras (51) composée de bras (51a, 51b).

22. Dispositif de séparation selon la revendication 21, **caractérisé en ce qu'**on a disposé, dans un intervalle entre deux traverses (10) ou deux paires de bras (17) de deux premiers dispositifs en étrier externes (2), une traverse (50) avec des bras (51a, 51b) d'un second dispositif en étrier interne (3) de telle sorte que la pluralité des dispositifs en étrier internes (3) soit disposée le long du sens longitudinal du tunnel (12), imbriquée entre les dispositifs en étrier externes (2).

23. Dispositif de séparation selon la revendication 22, **caractérisé en ce que** les traverses (50) des dispositifs en étrier internes (3) sont chacune raccordées sur leurs extrémités libres au moyen d'une poutre longitudinale (52), laquelle s'étend à l'extérieur des bras (17a, 17b) des dispositifs en étrier externes (2) dans le sens longitudinal du tunnel (12), de telle sorte que les traverses (50) et les poutres longitudinales (52) forment un cadre à barreaux.

24. Dispositif de séparation selon l'une quelconque ou plusieurs des revendications 21 à 23, **caractérisé en ce que** les bras (17a, 17b) d'un dispositif en étrier externe (2) s'engrènent dans les intervalles entre deux traverses (50) des dispositifs en étrier internes (3).

25. Dispositif de séparation selon l'une quelconque ou plusieurs des revendications précédentes, **caractérisé en ce que** les premiers dispositifs en étrier externes (2) et les seconds dispositifs en étrier internes (3) sont entièrement découplés l'un de l'autre du point de vue des forces.

26. Dispositif de séparation selon l'une quelconque ou plusieurs des revendications 21 à 25, **caractérisé en ce que** les traverses (50) des dispositifs en étrier internes (3) sont réalisées sous la forme de poutres caissons ouvertes vers le bas, en direction du tunnel (4), une glissière (52) s'étendant d'une extrémité libre des traverses (50) à une autre extrémité libre à l'intérieur des caissons, glissière sur laquelle les bras (51a, 51b) sont logés de manière à pouvoir se déplacer dans le sens transversal (11) au moyen de manchons coulissants (53).

27. Dispositif de séparation selon l'une quelconque ou plusieurs des revendications 21 à 26, **caractérisé en ce que** les bras (51a, 51b) d'une traverse (50) des dispositifs en étrier internes (3) sont couplés au moyen d'un vérin hydraulique (54) dans le sens transversal (11).

28. Dispositif de séparation selon l'une quelconque ou plusieurs des revendications 21 à 27, **caractérisé en ce que** les bras (51a, 51b) d'une traverse (50) des dispositifs en étrier internes (3) sont couplés de manière synchrone et symétrique au moyen du dispositif de synchronisation comportant une première crémaillère (55), une seconde crémaillère (56) et un pignon (57), le pignon (57) étant logé dans la traverse (50).

29. Dispositif de séparation selon l'une quelconque ou plusieurs des revendications 21 à 28, **caractérisé en ce que** les dispositifs en étrier internes (3) du second tunnel en étrier sont couplés au moyen d'un arbre de synchronisation (60) sur lequel sont disposés des pignons (61), lesquels sont couplés à des crémaillères (62) qui sont chacune reliées à l'un des bras (51b) des traverses (50) des dispositifs en étrier internes (3), l'arbre de synchronisation (10) étant logé dans toutes les traverses (50).

30. Dispositif de séparation selon l'une quelconque ou plusieurs des revendications 21 à 29, **caractérisé en ce qu'**on a disposé, sur les extrémités libres (70) des bras (51a, 51b) des traverses (50) des dispositifs en étrier internes (3), des dispositifs de serrage (71) servant de dispositifs de maintien, dispositifs de serrage qui sont réalisés sous la forme de dispositifs avec vérins à piston comportant une tige de piston (72) et un coussinet de serrage (73).

31. Dispositif de séparation selon la revendication 30, **caractérisé en ce que** les dispositifs de serrage (71) des dispositifs en étrier internes (3) sont disposés à la verticale, au-dessus du dispositif de serrage (41) du dispositif en étrier externe (2).

32. Dispositif de séparation selon l'une quelconque ou plusieurs des revendications 21 à 31, **caractérisé en ce qu'**on a disposé, au niveau des extrémité libres (40 ; 70) des bras (17a, 17b ; 51a, 51b), un dispositif de guidage (75) au moyen duquel deux dispositifs en étrier adjacents (2 ; 3) sont mécaniquement guidés l'un par rapport à l'autre dans le sens transversal (11) et dans le sens longitudinal (12), un seul dispositif de guidage étant notamment prévu sur les extrémités du dispositif de séparation (1).

33. Dispositif de séparation selon la revendication 32, **caractérisé en ce que** les dispositifs de guidage (75) sont réalisés sous la forme de glissières.

34. Dispositif de séparation selon l'une quelconque ou plusieurs des revendications précédentes, **caractérisé en ce que** le tunnel en étrier des dispositifs en étrier externes (2) et le tunnel en étrier des dispositifs en étrier internes (3) sont couplés, sur chaque côté externe, à un ou plusieurs dispositifs avec vérin à piston hydraulique (80), lesquels sont orientés dans un sens d'action parallèle au sens de séparation (8).

35. Dispositif de séparation selon la revendication 34, **caractérisé en ce que** le dispositif avec vérin à piston hydraulique (80) est une unité de vérin à piston double action comportant un vérin de précourse (81) et un vérin de séparation (82) dont les lignes d'action coïncident.

36. Dispositif de séparation selon la revendication 35, **caractérisé en ce que** le vérin de précourse (81) présente une course plus importante que le vérin de séparation (82).

37. Dispositif de séparation selon l'une quelconque ou plusieurs des revendications 6 à 36, **caractérisé en ceci** que les extrémités libres (40) des bras (17a, 17b) des dispositifs en étrier externes (2) sont reliées au moyen d'une poutre longitudinale (100) s'étendant dans le sens longitudinal du tunnel (12) et que des âmes (101) s'étendent à la verticale, vers le bas et l'intérieur, à partir de la poutre longitudinale (100), lesquelles âmes sont reliées, sur leurs arêtes libres, au moyen d'un rail traversant (102), dans le sens longitudinal du tunnel (12).

38. Dispositif de séparation selon la revendication 37, **caractérisé en ce que** les âmes (101) servent de logement pour les dispositifs de serrage (41) des dispositifs en étrier externes (2).

39. Utilisation d'un dispositif de séparation (1) selon l'une quelconque ou plusieurs des revendications précédentes pour la séparation de blocs de béton cellulaire (6a), qui forment un aggloméré de béton cellulaire (6), des joints de séparation (7) étant disposés entre les blocs de béton cellulaire (6a), les blocs de béton cellulaire (6a) étant empilés sur un fond dur (5).
